# EUROPEAN PATENT APPLICATION

(11) **EP 0 525 800 A2**
(43) Date of publication of application: **03.02.1993**
(21) Application number: 92113103.3
(22) Date of filing: 31.07.1992
(51) Int. Cl.: G06F 1/26, G06F 1/30

(54) **Battery-powered computer**

(30) Priority: 02.08.1991 JP 216167/91
(71) Applicant: NIPPON STEEL CORPORATION, Tokyo 100-12 (JP)
(72) Inventor: Nakai, Toshio, Chiyoda-ku, Tokyo (JP)
(74) Representative: VOSSIUS & PARTNER

(57) **Abstract**

A battery-powered computer comprises an auxiliary battery (23), a computer circuit (10) including a central processing unit (11), a holder (70) for removably accommodating a main battery (21), a switch (27) for generating a switching signal in response to operation of removing the main battery from the holder, a first circuit for supplying electricity of the main battery to the computer circuit, a second circuit for supplying electricity of the auxiliary battery to the computer circuit, and a switching circuit (60, 61) for normally activating the first circuit, and, response to the switching signal, for deactivating the first circuit and switching the computer circuit from a normal driving condition to a power-saved driving condition.

## Description

This invention relates to a compact, lightweight, portable, and battery-powered computer, and particularly to a battery-powered computer which is equipped with a main battery and an auxiliary battery and powered by the main battery normally and by the auxiliary battery when the main battery is being replaced.

A battery-powered computer is generally equipped with an auxiliary battery in addition to a main battery. A conventional battery-powered computer is provided with the auxiliary battery as a backup power source which is used when the electricity of the main battery has been consumed, and is designed to operate on the auxiliary battery at the replacement of the main battery in the same manner as it operates on the main battery, as described in Japanese Patent Unexamined Publication JP-A-2-14310 for example.

The battery-powered computer is designed to consume less electricity as possible so that it operates as long as possible before the battery is discharged completely. However, since the power consumption of the computer is large during its normal operation, the small capacity of the auxiliary battery can operate the computer only for a short period of time. Therefore, the conventional battery-powered computer involves a problem such that when the main battery is replaced, it is required to replace the main battery, in a short time before the auxiliary battery is used up or to have another large-capacity auxiliary battery.

An object of this invention is to solve the foregoing problem and provide a battery-powered computer which allows the user to expend a longer time for the replacement of the main battery during the operation of the computer.

According to this invention, in order to achieve the above object, the battery-powered computer having a main battery and auxiliary battery comprises a computer circuit including a central processing unit, means for removably mounting the main battery, means for generating a switching signal in response to an operation of removing the main battery from the main battery mounting means, a first circuit through which electricity of the main battery is supplied to the computer circuit, a second circuit through which electricity of the auxiliary battery is supplied to the computer circuit, and switching means for normally activating the first circuit, deactivating the first circuit in response to the switching signal, and switching the computer circuit from normal driving condition to power-saved driving condition.

According to the battery-powered computer of this invention, the computer circuit is normally driven in normal driving condition by the main battery, and by the auxiliary battery at the replacement of the main battery, while switching the computer circuit from the normal driving condition to the power-saved driving condition, whereby the auxiliary battery has less power consumption and it can afford a longer time for the replacement of the main battery.

### BRIEF DESCRIPTION OF THE DRAWINGS

Fig. 1 is a block diagram of the battery-powered computer according to the first embodiment of this invention;
Fig. 2 is a diagram showing the structure of the main battery mounting section of the battery-powered computer shown in Fig. 1;
Fig. 3 is a flowchart showing an example of the switching operation from the normal driving condition to the power-saved driving condition at the replacement of the main battery;
Fig. 4 is a block diagram of the battery-powered computer according to another embodiment of this invention; and
Fig. 5 is a flowchart showing another example of the switching operation from the normal driving condition to the power-saved driving condition at the replacement of the main battery.

### DESCRIPTION OF THE PREFERRED EMBODIMENTS

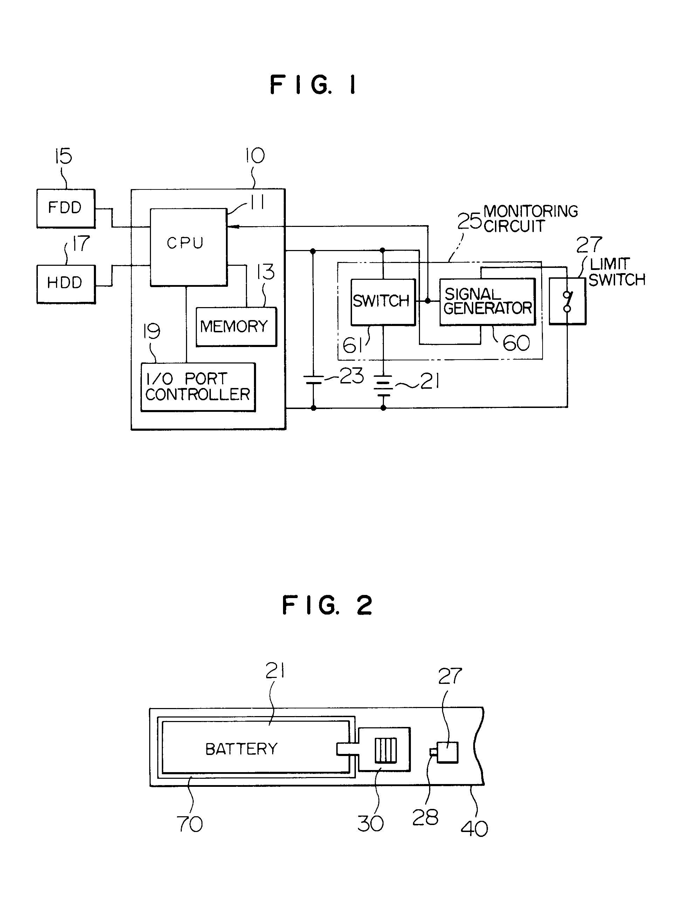

An embodiment of this invention will be described with reference to Figs. 1 through 3. In Fig. 1, a main computer circuit 10 comprises a central processing unit (CPU) 11, a memory device 13 for storing information to be processed by the CPU, and an I/O port controller 19 which functions as the interface of the CPU with external devices such as keyboard and printer. The computer circuit 10 is connected with a floppy disk drive unit (FDD) or hard disk drive unit (HDD) 17 for storing a vast amount of information, through a monitoring circuit 25 with a main battery 21 which is the main power source of the whole computer and an auxiliary battery 23 which is a backup battery having a relatively large capacity preferably. A limit switch 27 is connected to the monitoring circuit 25.

The main battery 21 is mounted in a battery holder which is formed inside the case 40 of the main circuit 10 (see Fig. 2). When mounted, the battery terminals are connected to the computer circuit through the monitoring circuit 25. The battery holder 70 in the computer case 40 is provided with a lock mechanism 30 and a limit switch 27 as shown in Fig. 2. By placing the main battery 21 in the battery holder and sliding the lock mechanism 30 to the left, the main battery is locked in the holder so as not to be removed therefrom. By sliding the lock mechanism 30 to the right, the battery holder is unlocked and the main battery 21 can be taken out of it. At this time, the right end of the lock mechanism comes to engage with the arm 28 of the normally-closed limit switch 27, thereby causing it to open.

The monitoring circuit 25 includes a signal generater 60 and a switch 61. When the lock mechanism 30 is acting, the limit switch 27 is closed, causing the signal generator 60 to produce a high level logic signal "1" (power-saved mode cancellation signal 29). This signal 29 is fed to the CPU 11, and also applied to the switch 61, causing it to close. When the lock mechanism 30 is made inactive, causing the limit switch 27 to open, the signal generator 60 produces a low-level logic signal "0" (power-saved mode signal 28), by which the switch 61 is opened. The power-saved mode signal 28 is fed to the CPU 11.

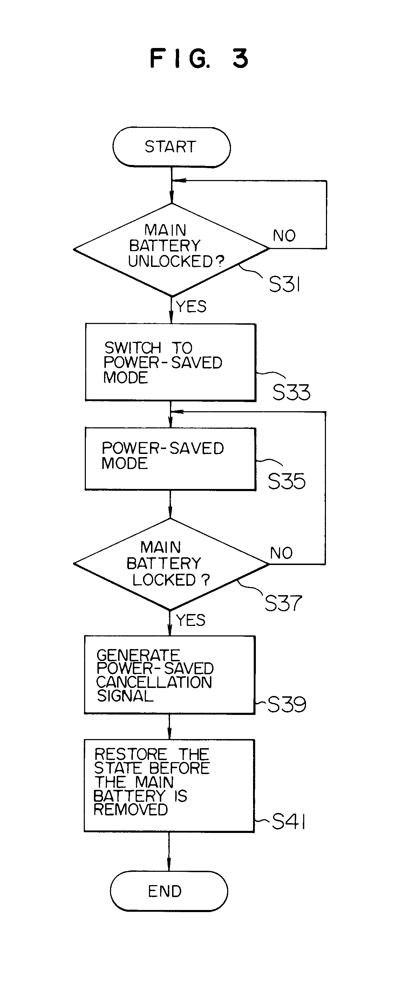

Next, the operation of replacing the main battery of the battery-powered computer shown in Fig. 1 will be explained with reference to Fig. 3. When the main battery 21 is mounted and the lock mechanism 30 is acting, the switch 61 is open and the power-saved mode cancellation signal 29 is fed to the CPU as mentioned above. Accordingly, the main circuit 10 operates in the normal driving condition by the main battery. When the lock mechanism 30 is released for the replacement of the main battery 21 (step 31), the limit switch 27 is opened. The signal generator 60 produces the power-saved mode signal 28 and delivers it to the CPU 11. In response to the signal 28, the CPU 11 causes the main circuit 10 to be operative in the power-saved driving condition (step 33). The power-saved mode signal 28 also opens the switch 61 so that the main battery is disconnected from the main circuit, and the main circuit operates in the power-saved driving condition by the auxiliary battery 23 (step 35).

In the power-saved mode of this computer, the contents of the registers for the CPU 11 and I/O port controller 19 are saved in the main memory 13, the clock frequency of the CPU 11 is lowered, the power supply to the FDD 15 and HDD 17 is cut off, the power supply to parts of the I/O port controller 19, e.g., the serial I/O port and printer I/O port, is cut off, and the back-light and the drive circuit for the liquid crystal display (LCD) panel (not shown) are deactivated. The keyboard is maintained active even in the power-saved mode.

When the main battery 21 is placed in the battery holder 70 and the lock mechanism 30 is moved to the left (step 37), the limit switch 27 is closed. The signal generator 60 in the monitoring circuit 25 is powered by the main battery 21 and produces the power-saved mode cancellation signal 29, which is fed to the CPU 11 (step 39). The CPU 11 responds to the signal 29 to bring the main circuit 10 operative in the normal driving condition. The signal 29 is also applied to the switch 61 so that it is closed, and the main circuit 10 is powered by the main battery 21. Consequently, the main circuit 10 regains the state before the main battery 21 is removed (step 41).

According to this embodiment, when the main battery is replaced during the computer operation, the power source is switched to the auxiliary battery and the computer circuit is switched to operate in the power-saved driving condition, which is maintained during the work for replacement of the main battery, whereby the user can afford a long time for the replacement of the main battery. Once a new main battery is installed, the computer automatically regains the state before the main battery is removed, and the user is not required to have any settling operation, thereby increasing the efficiency in operation.

Although the foregoing embodiment is designed to keep the keyboard active in the power-saved mode by providing an auxiliary battery of relatively large power capacity, the present invention is not limited to this arrangement and the power supply to the keyboard I/O port may be cut off in the power-saved mode when an auxiliary battery of small power capacity is used.

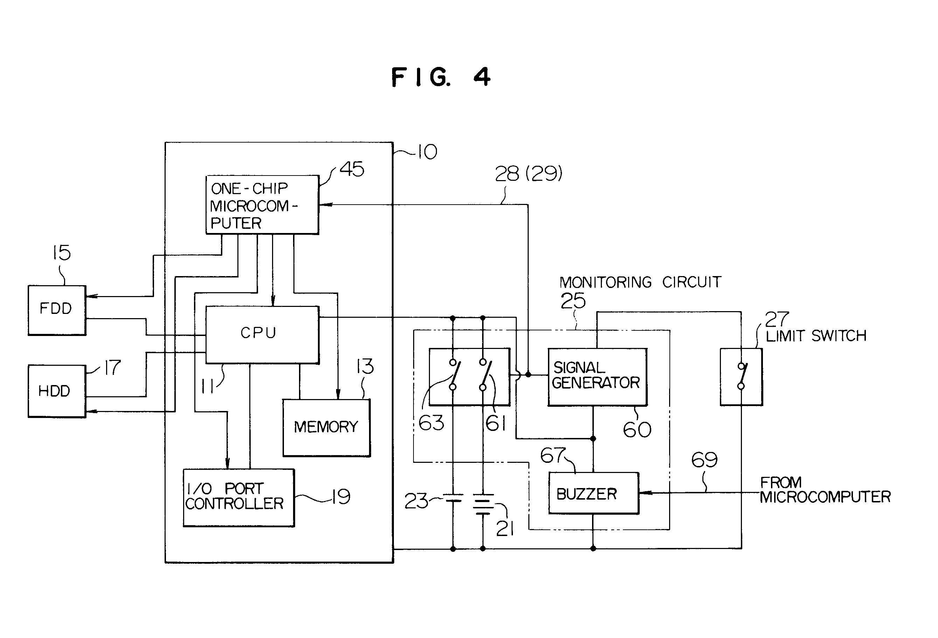

Another embodiment of this invention will be described with reference to Fig. 4. In the figure, the same blocks as those of Fig. 1 are designated by the same symbols. This embodiment is identical to the preceding embodiment of Fig. 1 except for the additional provision of a one-chip microcomputer 45, a normally-closed switch 63 which connects the auxiliary battery 23 to the main circuit 10, and a buzzer 69 in the monitoring circuit 25.

The one-chip microcomputer 45 monitors the power voltages of the units constituting the battery-powered computer such as the CPU 11, FDD 15, HDD 17, I/O port controller 19 and memory 13 and if the power voltage of any of these units falls below the prescribed level, it issues an alarm signal 69 to activate the buzzer 67 in the monitoring circuit 25. The one-chip microcomputer also controls these units upon receiving the power-saved mode signal 28 or power-saved mode cancellation signal 29 from the signal generator 60. This is in contrast to the preceding embodiment of Fig. 1 in which the CPU 11 controls the switching between the normal driving condition and the power-saved driving condition upon receiving the signals 28 and 29.

The power-saved mode signal 28 is effective to close the switch 63 to connect the auxiliary battery 23 to the main circuit 10 and then open the switch 61 so that the main battery 21 is disconnected from the main circuit 10. The power-saved mode cancellation signal 29 is effective to close the switch 61 to connect the main battery 21 to the main circuit 10, and then open the switch 63 to disconnect the auxiliary battery 23 from the main circuit 10.

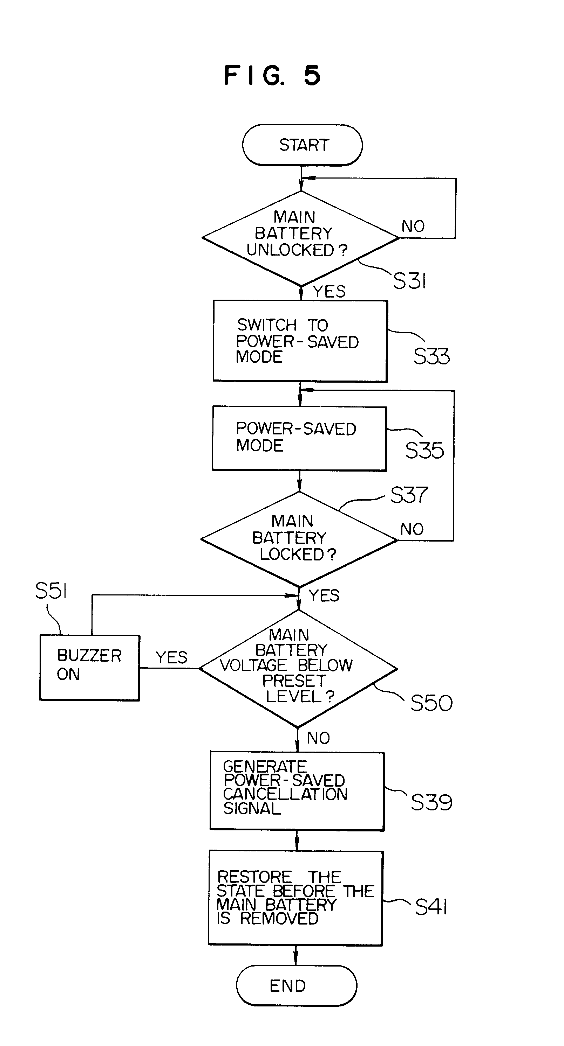

Fig. 5 is a flowchart showing the operation of replacing the main battery in the embodiment of Fig. 4. The operation is identical to that shown in Fig. 3 except that steps 50 and 51 are added between the steps 37 and 39. In this embodiment, after the main battery 21 is replaced and the lock mechanism 30 is settled, the step 50 is carried out in which the one-chip microcomputer monitors the power voltages of the respective units. If the power voltage of any unit is below the prescribed level, the alarm signal 69 is generated to activate the buzzer in the step 51 so that the user is aware of the defective battery and replaces it with a good one.

In both embodiments of Fig. 1 and Fig. 4, when the lock mechanism 30 is moved to the right for the replacement of battery, the signal generator 60 operates to generate the power-saved mode signal 28, bringing the respective units to the power-saved driving condition. The switch 61 operates with a time delay so that the main battery is disconnected from the main circuit 10 upon completion of transition to the power-saved driving condition. Accordingly, switching to the power-saved driving condition of all unit is carried out by using the electricity of the main battery, and the power consumption of the auxiliary battery is reduced.

## Claims

1. A battery-powered computer comprising:
an auxiliary battery (23);
a computer circuit (10) including a central processing unit (11);
means (70) for removably accommodating a main battery (21);
means (27) for generating a switching signal in response to operation of removing said main battery from said battery accommodating means;
a first circuit for supplying electricity of said main battery to said computer circuit;
a second circuit for supplying electricity of said auxiliary battery to said computer circuit; and
means (60, 61) for normally activating said first circuit, and responsive to said switching signal for deactivating said first circuit and switching said computer circuit from a normal driving condition to a power-saved driving condition.

2. A battery-powered computer according to claim 1, wherein said switching signal generating means (27) includes a lock mechanism (30) which is movable between a first position where said main battery is fixed in said battery accommodating means and a second position where said main battery is allowed to be removed, and a limit switch (27) which generates said switching signal when said lock mechanism is in the second position.

3. A battery-powered computer according to claim 2, wherein said switching means includes a signal generator (60) which generates a power-saved mode signal in response to said switching signal, and a switch (61) connected to said first circuit, said switch being opened in the presence of said power-saved mode signal and closed in the absence of said power-saved mode signal.

4. A battery-powered computer according to claim 3, wherein said switching means further includes a second switch (63) which is connected to said second circuit, said second switch being closed in the presence of said power-saved mode signal and opened in the absence of said power-saved mode signal.

5. A battery-powered computer according to any one of claims 1 to 4, wherein said switching means deactivates said first circuit after said computer circuit has been switched from the normal driving condition to the power-saved driving condition.
